# EUROPEAN PATENT APPLICATION

(11) **EP 3 506 485 A1**
(43) Date of publication of application: **03.07.2019**
(21) Application number: 17382905.2
(22) Date of filing: 26.12.2017
(51) Int. Cl.: H02M 7/483

(54) **METHOD FOR CONTROLLING A POWER CONVERTING AND A SYSTEM THEREOF**

(71) Applicant: Ikerlan, S. Coop, 20500 Arrasate-Mondragon (ES)
(72) Inventor: AZKARATE-ASKATSUA BLÁZQUEZ, Mikel, E-20500 Arrasate-Mondragón, Guipúzcoa (ES); FLORES BARROSO, José Luis, E-20500 Arrasate-Mondragón, Guipúzcoa (ES); PEREZ CERROLAZA, Juan Martin, E-20500 Arrasate-Mondragón, Guipúzcoa (ES); AGIRRE TRONCOSO, Irune, E-20500 Arrasate-Mondragón, Guipúzcoa (ES)
(74) Representative: ABG Intellectual Property, S.L.

(57) **Abstract**

The present invention is related to a computer implemented method for controlling a power converter, the power converter comprising n branches, a central processor comprising a CPU, a unified memory and a plurality of m computational cores for concurrent computing, a pulse width modulator module, wherein the method comprises defining one or more categories of branches responsive to the control required for that switch, defining one task per category in the form of a group of instructions executable by a core and each task and, additionally the method comprises a close loop control of the n branches in the form of a group of instructions executable by the central processor by the following steps: continuously reading a digital data stream from each branch; splitting each digital data stream into packets and storing the packets in the unified memory; processing of the plurality of packets in a concurrent manner by distributing a plurality of tasks to said m computational cores; providing one discretization of the pulse width modulation per branch to the at least one switch of said branch by means of the pulse width modulator module and actuating the switch responsive to the discretization according to the order stablished by the timestamp of the associated packet. A processing system, a computer program product and a computer-readable storage medium for carrying out the steps of the method is also described.

## Description

### FIELD OF THE INVENTION

The present invention is related to field of controlling power converters, in particular, power converters comprising a plurality of branches wherein each branch may have a different purpose or technology.

### PRIOR ART

A power converter is an electrical or electro-mechanical device for converting electrical energy. This conversion may be a conversion between AC to DC or vice versa, a change of the voltage or the frequency or a combination of these between an input signal and an output signal.

It is well known the use of power converters in transports such as railways, automotive field and other sectors where any electric motor is involved, elevation, energy generation and conversion etc. In all of these fields, it is required managing a great number of inputs and adjusting the power converter in function of the inputs received.

Normally, this is done by implementing a specific circuit to each power converter and in function of the type of input and the output to be outputted. For example, during the operation of a train different requirements are needed in the acceleration, the deceleration and in the maintaining of the speed of the train. In this particular case, the DC input of the train may suffer high fluctuations of the voltage that must be corrected when converting to AC involving a change of the commutation schedule of the switches.

This is also applicable to cars or windfarm fields which depend on the direction and speed of the wind.

This solution requires a high number of electronic circuits which increases the cost and the probability of failure of said applications. Further, due to this amount of circuits, the costs of management and reparation are very high. Thus, it is needed a method and a system which reduce the number of employed circuits and the cost of maintenance of the system.

When a plurality of commutation schedules must be recalculated, hereinafter also identified as discretizations, said calculations must be carried out before applying said plurality of discretizations to the plurality of switches in a very short period of time overloading the computations capacities of current devices.

### DESCRIPTION OF THE INVENTION

The present invention provides an alternative solution for the aforementioned problems, by a computer implemented method for controlling a power converter according to claim 1, a processing system according to claim 13, a computer program product according to claim 14 and a computer-readable storage medium according to claim 15. In dependent claims, preferred embodiments of the invention are defined.

In a first inventive aspect, the invention provides *a computer implemented method for controlling a power converter, the power converter comprising:*

### i. n branches wherein each branch comprises:

∘ *at least one switch being actuated between two states, a first conducting state and a second non-conducting state;*
∘ *at least one sensor providing a signal continuous in time;*

A branch of the power converter should be understood as an electronic circuit which is configured for being actuated between a first conducting state, or close circuit, and a second non-conducting state, or open circuit.

The n branches may be similar circuits or may be different circuits or may be organized in groups of circuits depending of the needs of the application or output system where the power converter is implemented or connected. Preferably, *n* is a positive integer number strictly greater than 0.

Similarly, the at least one sensor may vary from one branch to another. Said at least one sensor is an electronic device configured to measure the output of the branch, preferably a voltmeter or an amperemeter.

In one embodiment the n branches are distributed in a group of branches intended to a specific function defined by an output system which is connected. In other embodiments, the n branches are distributed in groups of a plurality of branches, where each group of branches is intended to a specific function defined by an output system. Thus, each group is connected to an output system.

### ii. a central processor comprising a CPU, a unified memory and a plurality of m computational cores for concurrent computing;

A unified memory should be understood as any memory configured to store digital data connected with the computational cores; that is, the computational cores have direct access to the memory. Preferably, the memory may be a random access memory (RAM), or a cache memory. The term "unified" should be understood as the different elements of the central processor that have a direct access or a direct connection to said memory. Further, the elements of the central processor may also be directly connected between them.

### iii. a pulse width modulator module comprising:

∘ *an input in communication with the central processor for receiving a discretization of the pulse width modulation assigned to each branch;*
∘ *an output per branch in communication with the at least one switch of the branch for actuating on said switch responsive to the discretization of the pulse width modulation assigned to the branch;*

A pulse width modulator module should be understood as an electronic circuit configured to provide a pulse signal with a determined width. The width is determined by the input received in the pulse width modulator module, wherein said input is a discretization of the pulse to be produced, i.e., the commutation schedule where the pulse starts and/or ends, or changes its voltage from positive to negative and vice versa. Pulses change the state of the switches at the samples of time defined by the discretization or the commutation schedule.

The discretization provides the information about the shape, the frequency and amplitude of the pulse to be generated by the pulse width modulator module.

### Wherein the method comprises:

- *defining one or more categories of branches responsive to the control required for that switch;*
- *defining one task per category in the form of a group of instructions executable by a core and each task comprises the following steps:*
   ∘ *inputting the identification of a packet stored in the unified memory to be processed;*
   ∘ *processing the packet generating the discretization of the pulse width modulation responsive to the category;*
   ∘ *outputting the discretization to the unified memory;*
   ∘ *marking the packet as being processed.*

Depending on the type of switch and output system connected to said branch or group of branches it would require a specific output signal. Thus, categories are defined in order to satisfy the necessities of each output system. A task is the group of instructions or steps which allows obtaining the correct discretization for said necessities.

*Additionally, the method comprises a close loop control of the n branches in the form of a group of instructions executable by the central processor by the following steps:*
*a) continuously reading a digital data stream from each branch; the signal continuous in time provided by at least one sensor;*
*b) splitting each digital data stream into packets and storing the packets in the unified memory, assigning to each packet a timestamp, a category, and marking the packets as being non-processed;*
*c) processing of the plurality of packets in a concurrent manner by distributing a plurality of tasks to said m computational cores wherein the category of each task is responsive to the category of the packet to be processed and according to the order stablished by the timestamp;*
d) *providing one discretization of the pulse width modulation per branch to the at least one switch of said branch by means of the pulse width modulator module and actuating the switch responsive to the discretization according to the order stablished by the timestamp of the associated packet.*

A digital data stream should be understood as a stream of bytes outputting from each branch, in particular from the at least one sensor of each branch. Once the digital data stream is read, it is split in packets and said packets are stored in the unified memory with a timestamp. The timestamp is a determined mark of time which sets in which moments have been read the packets. Depending on the task and the timestamp, each computational core would access to a determined section of the unified memory to calculate the discretization according to said task.

Each switch is configured to change from a first state to a second state responsive to the discretization calculated by the plurality of m computational cores and by means of the pulse width modulator module.

Advantageously, due to the use of at least one category and at least one task in the method of the invention, it permits reducing the number of components of the power converter avoiding the use of specific circuits and reducing the cost and the maintenance cost of said power converter. Further, the method allows controlling more than one power converter in a dynamic manner.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other features and advantages of the invention will be seen more clearly from the following detailed description of a preferred embodiment provided only by way of illustrative and non-limiting example in reference to the attached drawings.
Figure 1 This figure shows in a schematic manner a power converter being managed by the computer implemented method according to an embodiment of the present invention.
Figure 2 This figure shows a schematic representation of the output of n branches of a power converter specific instantiation after applying an embodiment according to the invention by overlapping a plurality of components making up a complex wave.
Figure 3 This figure shows a schematic representation of a power converter connected with an external sensor where the computer implemented method according to an embodiment of the invention is executed.
Figure 4 This figure shows an embodiment of the method of the invention wherein a specific category is used.
Figure 5 This figure shows an embodiment of a power converter including a FPGA where the computer implemented method according to an embodiment of the invention is executed.
Figure 6 This figure shows an embodiment of a power converter with a further central processor where the computer implemented method according to an embodiment of the invention is executed.

### DETAILED DESCRIPTION OF THE INVENTION

As it will be appreciated by one skilled in the art, aspects of the present invention may be embodied as a system, method or computer program product.

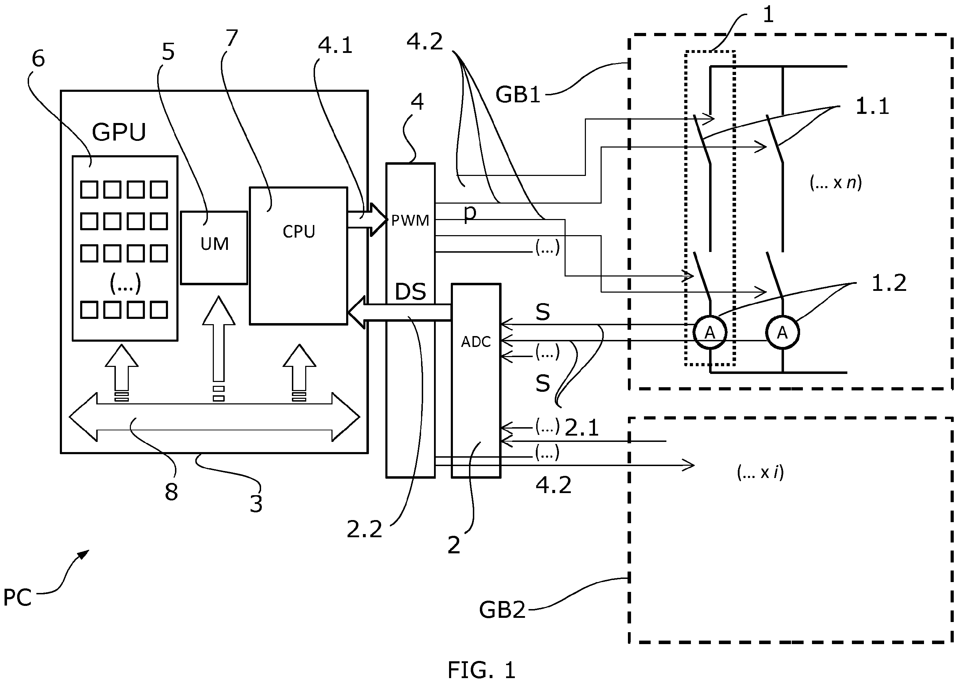

Figure 1 describes a power converter (PC) comprising two groups of branches (GB1, GB2). The first group of branches (GB1) comprises a plurality of *n* branches (1) wherein each branch (1) comprises a switch (1.1) being actuated between two states, a first conducting state and a second non-conducting state and, a sensor (1.2) providing a signal (S) continuous in time. In this embodiment, the represented number of *n* branches (1) is equal to two, but in other embodiments more than two branches are also possible.

In this embodiment, the second group of branches (GB2) comprises the same number of switches (1.1) and sensors (1.2) in each branch (1) than the first group of branches (GB1). Additionally, the number of *i* branches (1) is different than the number of *n* branches (1) of the first group of branches (GB1). For simplicity the elements of the second group of branches (GB2) have not been drawn in figure 1. In other embodiments, the *n* branches (1) may be distributed in one group of branches (GB1) comprising a plurality of branches (1), or in more than two groups of branches wherein each group comprises a plurality of branches (1). Separated groups may have different pulse width modulation requirements. The separated specification defines the separated categories.

The power converter of figure 1 further comprises a pulse width modulator module (4) and a central processor (3) with a CPU (7), a unified memory (5) and a plurality of *m* computational cores (6) for concurrent computing. As it can be appreciated in figure 1, the CPU (7), the unified memory (5) and the plurality of *m* computational cores (6) share the same data bus (8). This configuration allows to directly access to all the elements of the central processor (3) between them increasing the efficiency of the method when implements its steps in the central processor (3).

In other embodiment, the CPU (7) is one of the cores of the plurality of m cores (6). As the core is integrated (6), the number of elements of the central processor (3) is reduced, increasing the efficiency of the method and the system of the present invention.

As it can be appreciated in figure 1, the pulse width modulator module (4) comprises:
∘ an input (4.1) in communication with the central processor (3) for receiving a discretization (p) of the pulse width modulation assigned to each branch (1). In this embodiment, the input (4.1) is in communication with the CPU (7);
∘ an output (4.2) per branch (1) in communication with the at least one switch (1.1) of the branch (1) for actuating on said switch (1.1) responsive to the discretization (p) of the pulse width modulation assigned to the branch (1). As it can be appreciated in figure 1, each group of branches (GB1, GB2) has its correspondent output (4.2) per branch (1).

The method of the present invention comprises the following steps in the power converter (PC):
- defining one or more categories of branches (1) responsive to the control required for that switch (1.1);
- defining one task per category in the form of a group of instructions executable by a core (6) and each task comprises the following steps:
   ∘ inputting the identification of a packet stored in the unified memory (5) to be processed;
   ∘ processing the packet generating the discretization (p) of the pulse width modulation responsive to the category;
   ∘ outputting the discretization (p) to the unified memory (5);
   ∘ marking the packet as being processed; and,
   additionally, the method comprises a close loop control of the *n* branches (1) in the form of a group of instructions executable by the central processor (3) by the following steps:
   a) continuously reading a digital data stream (DS) from each branch (1) the signal (S) continuous in time provided by at least one sensor (1.2);
   b) splitting each digital data stream (DS) into packets and storing the packets in the unified memory (5), assigning to each packet a timestamp, a category, and marking the packets as being non-processed;
   c) processing of the plurality of packets in a concurrent manner by distributing a plurality of tasks to said *m* computational cores (6) wherein the category of each task is responsive to the category of the packet to be processed and according to the order stablished by the timestamp;
   d) providing one discretization (p) of the pulse width modulation per branch (1) to the at least one switch (1.1) of said branch (1) by means of the pulse width modulator module (4) and actuating the switch (1.1) responsive to the discretization (p) according to the order stablished by the timestamp of the associated packet.

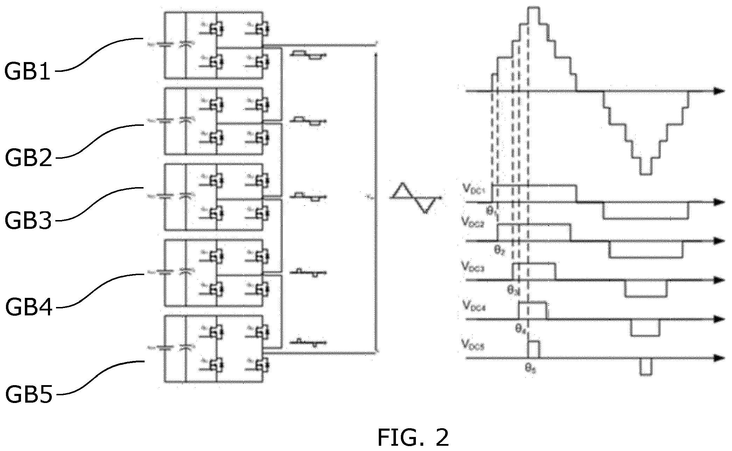

Figure 2 shows the result of applying the method of the invention in a power converter with a group of five groups of branches (GB1, GB2, GB3, GB4, GB5) wherein the output is a combination of the outputs of the plurality of branches (GB1, GB2, GB3, GB4, GB5) resulting approximately in a single saw tooth signal (the "tooth" being triangular).

In one embodiment, the categories identify the type of switch (1.1), the operative mode pre-assigned to the switch (1.1), a group of switches (1.1) combined for the generation of a pre-specified modulation, the operative mode pre-assigned according to the modulation of the power converter (PC), or, any combination of them.

Advantageously, this embodiment of the method of the invention allows distinguishing different switches (1.1) configured to operate different output systems, reducing even more the circuitry in the power converter (PC) to only the central processor (3) and the pulse width modulator module (4).

In other embodiment, the power converter (PC) is connected to an external sensor and two or more categories are defined depending on two or more ranges of values provided by the external sensor. These separated categories allow a dynamic behavior of the converter resulting from the evolution of one or more parameters, for instance responsive to the operative conditions of the converter or the device being powered by the power converter.

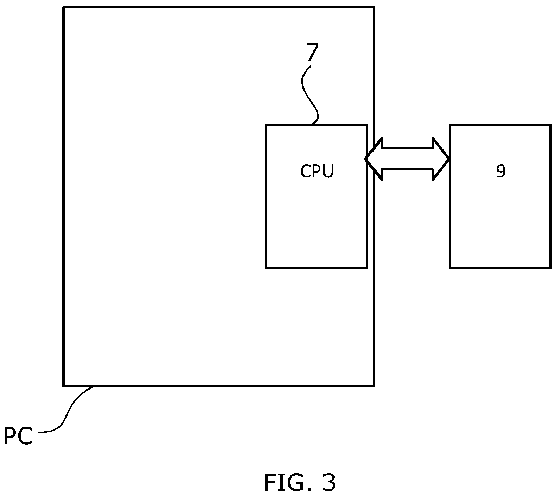

In one embodiment, the external sensor (9) is directly connected with the CPU (7) as it can be appreciated in figure 3. Preferably, the external sensor (9) is an accelerometer. In this embodiment, the CPU (7) the categories depends on if the accelerometer detects an acceleration or a deceleration or a constant speed.

In other embodiment, the external sensor (9) is directly connected to the DC line to be converted into an AC signal allowing to adapt the switch commutations responsive to the voltage of the line, causing to provide an stable output with no perturbations nor unwanted harmonics.

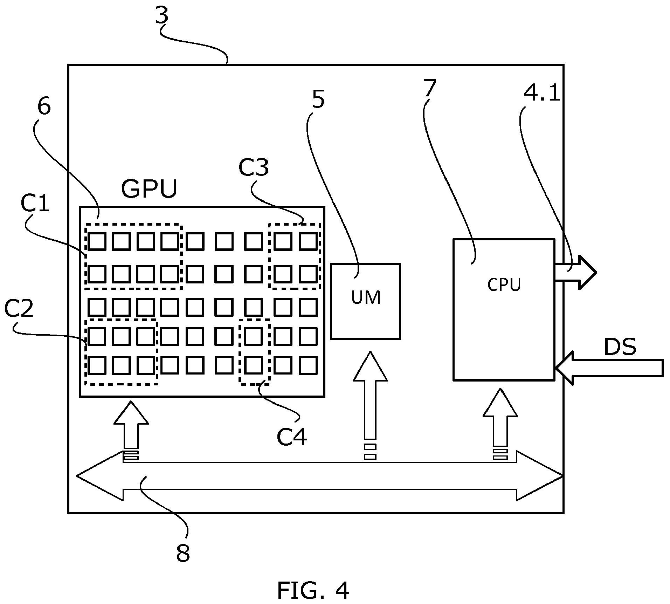

Figure 4 shows an expanded view of the power converter (PC) of the figure 1, when in view of the category a task is created which implies the operation of a determined set of computational cores (6). As it can be appreciated, the CPU (7) has defined four categories (C1, C2, C3, C4) in view of the output system connected to the n branches (1). A high computational cost is required for each task associated to each category (C1, C2, C3, C4) wherein a plurality of tasks has to be executed for each category (being each task the control of a different embodiment of power conversion: DCDC, DCAC, ACDC, etc.).

In particular, the first category (C1) is executed on eight computational cores (6), the second category (C2) is executed on six computational cores (6), the third category (C3) is executed on four computational cores (6) and the fourth category (C4) is executed on two computational cores (6).

Thus, the tasks associated to the category of highest computational cost, i.e., the first category (C1) is executed on more computational cores (6) than the tasks associated to the category of the lowest computational cost, i.e., the fourth category (C4).

These embodiments further reduce the number of circuits of the power converter (PC) because there is no need of any dedicated circuit for each situation of acceleration or a deceleration or a constant speed. This is very helpful when the power converter is installed in devices such as a train or in an electric car.

In other embodiment, the method further comprises a further step f) of disposing the stored packets marked as being processed. Advantageously, this embodiment disposes the memory used in the unified memory (5) by freeing the allocated packages increasing the efficiency of the method.

In one embodiment, a category is associated to a determined timestamp and distributed to a group of the plurality of m cores (6). Advantageously, this allows prioritizing categories and tasks increasing the efficiency of the method.

Additionally, the power converter (PC) of figure 1 further comprises an Analog to Digital Converter (ADC) (2), said ADC converter (2) comprising:
∘ an input (2.1) per branch (1) in communication with the at least one sensor (1.2) of the branch (1) for converting the signal (S) of the sensor (1.2) into a digital data stream (DS);
∘ an output (2.2) in communication with the central processor (3) for providing the converted digital data stream (DS);
wherein the step a) further comprises converting each continuous in time signal (S) into the digital data stream (DS) by means of the ADC converter (2).

In the embodiment of the figure 1, the plurality of *m* computational cores (6) for concurrent computing comprises the cores of a GPU (Graphical Processing Unit). Thus, the method of the present invention allows integrating in a power converter (PC) a personal computer motherboard with a CPU and video-card which comprises a plurality of m computational cores (6) sharing the same bus in a very efficient manner.

Advantageously, the method provides a dynamic modulation of the switches of the branches according to the branch operative conditions, being each switch modulated according to a specific commutation schedule/discretization, all the discretizations being processed in a concurrent manner.

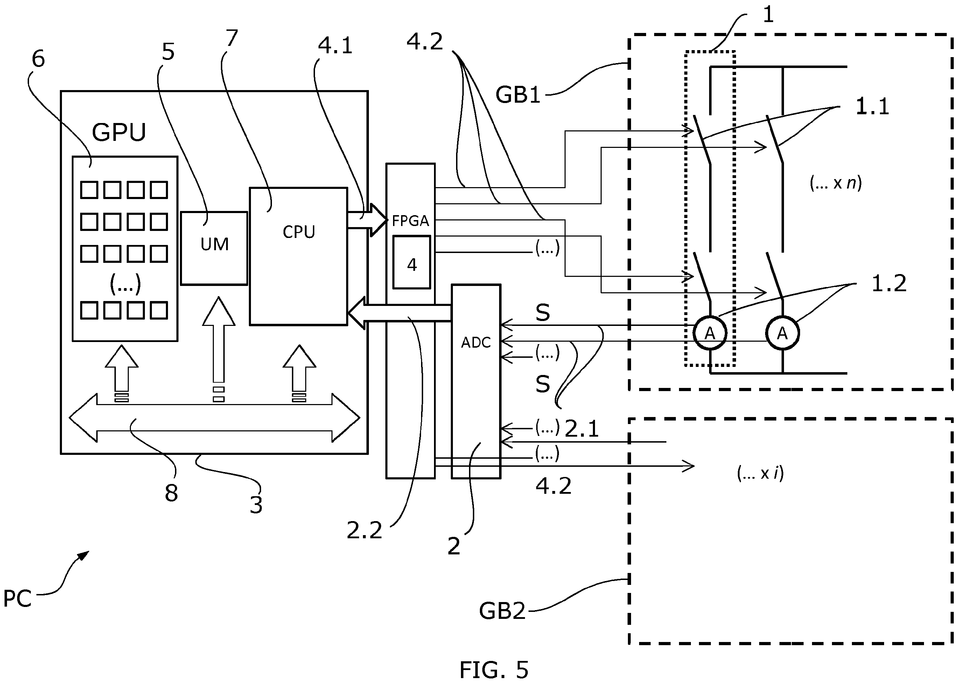

Figure 5 shows another power converter (PC) wherein the method of the invention is implemented. In particular, in this embodiment the pulse width modulator module (4) is integrated in a FPGA.

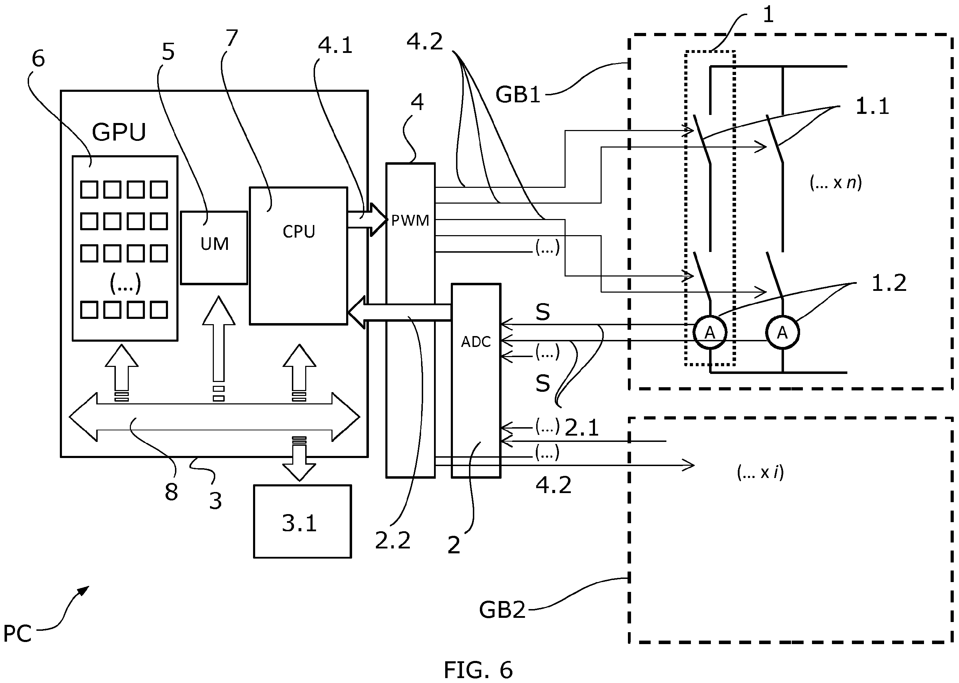

Figure 6 shows another power converter (PC) wherein the method of the invention is implemented. In particular, in this embodiment the power converter (PC) further comprises a further central processor (3.1). In one embodiment, the further central processor (3.1) configured to monitor the access to the unified memory (5) by the plurality of m computational cores (6). In other embodiment, the further central processor (3.1) further comprises a redundant channel configured for carrying out the steps of the method of any of the previous disclosed embodiments providing a redundant computation for detecting errors when the results are different rather than being equal as expected.

In other embodiments, the power converter (PC) further comprises a further central processor (3.1) with a redundant channel configured for carrying out the steps of the method of any of the previous disclosed embodiments providing a redundant computation for detecting errors. Additionally, when the error is detected the switch associated to the branch (1) is disconnected.

Advantageously, these embodiments further increase the reliability of the management of the *n* branches (1), allowing to fulfil the standard IEC-61508.

## Claims

1. A computer implemented method for controlling a power converter (PC), the power converter (PC) comprising:
i. *n* branches (1) wherein each branch (1) comprises:
∘ at least one switch (1.1) being actuated between two states, a first conducting state and a second non-conducting state;
∘ at least one sensor (1.2) providing a signal (S) continuous in time;
ii. a central processor (3) comprising a CPU (7), a unified memory (5) and a plurality of m computational cores (6) for concurrent computing;
iii. a pulse width modulator module (4) comprising:
∘ an input (4.1) in communication with the central processor (3) for receiving a discretization (p) of the pulse width modulation assigned to each branch (1);
∘ an output (4.2) per branch (1) in communication with the at least one switch (1.1) of the branch (1) for actuating on said switch (1.1) responsive to the discretization (p) of the pulse width modulation assigned to the branch (1);
wherein the method comprises:
- defining one or more categories of branches (1) responsive to the control required for that switch (1.1);
- defining one task per category in the form of a group of instructions executable by a core (6) and each task comprises the following steps:
∘ inputting the identification of a packet stored in the unified memory (5) to be processed;
∘ processing the packet generating the discretization (p) of the pulse width modulation responsive to the category;
∘ outputting the discretization (p) to the unified memory (5);
∘ marking the packet as being processed; and,
additionally, the method comprises a close loop control of the n branches (1) in the form of a group of instructions executable by the central processor (3) by the following steps:
a) continuously reading a digital data stream (DS) from each branch (1) the signal (S) continuous in time provided by at least one sensor (1.2);
b) splitting each digital data stream (DS) into packets and storing the packets in the unified memory (5), assigning to each packet a timestamp, a category, and marking the packets as being non-processed;
c) processing of the plurality of packets in a concurrent manner by distributing a plurality of tasks to said *m* computational cores (6) wherein the category of each task is responsive to the category of the packet to be processed and according to the order stablished by the timestamp;
d) providing one discretization (p) of the pulse width modulation per branch (1) to the at least one switch (1.1) of said branch (1) by means of the pulse width modulator module (4) and actuating the switch (1.1) responsive to the discretization (p) according to the order stablished by the timestamp of the associated packet.

2. The method according to claim 1, wherein the categories identify:
- the type of switch (1.1);
- the operative mode pre-assigned to the switch (1.1);
- a group of switches (1.1) combined for the generation of a pre-specified modulation;
- the operative mode pre-assigned according to the modulation of the power converter (PC); or,
- any combination of them.

3. The method according to the previous claim, wherein the power converter (PC) is connected to an external sensor and two or more categories are defined depending on two or more ranges of values provided by the external sensor.

4. The method according to any one of the previous claims, further comprising a further step f) of disposing the stored packets marked as being processed.

5. The method according to any one of the previous claims, wherein a category is associated to a determined timestamp and distributed to a group of the plurality of m cores (6).

6. The method according to any one of the previous claims, wherein the power converter (C) further comprises an ADC converter (2), said ADC converter (2) comprising:
∘ an input (2.1) per branch (1) in communication with the at least one sensor (1.2) of the branch (1) for converting the signal (S) of the sensor (1.2) into a digital data stream (DS);
∘ an output (2.2) in communication with the central processor (3) for providing the converted digital data stream (DS);
wherein the step a) further comprises converting each continuous in time signal (S) into the digital data stream (DS) by means of the ADC converter (2).

7. The method according to any one of the previous claims, wherein the plurality of m computational cores (6) for concurrent computing are the cores of a GPU (Graphical Processing Unit).

8. The method according to any one of the previous claims, wherein the CPU (7) is one of the plurality of *m* cores (6).

9. The method according to any one of the previous claims, wherein the pulse width modulator module (4) is integrated in a FPGA.

10. The method according to any one of the previous claims, wherein the power converter (PC) further comprises a further central processor (3.1) configured to monitor the access to the unified memory (5) by the plurality of m computational cores (6).

11. The method according to any one of the previous claims, wherein the power converter (PC) further comprises a further central processor (3.1) with a redundant channel configured for carrying out the steps of the method of any of the previous claims providing a redundant computation for detecting errors.

12. The method according to the previous claim, wherein the switch associated to the branch (1) is disconnected when the error has been detected.

13. A processing system comprising means i) to iii) of claim 1 or means i) to iii) and the ADC converter (2) according to claim 6 for carrying out the steps of the method of any one of the previous claims.

14. A computer program product comprising instructions which, when the program is executed by a computer, cause the computer to carry out the steps of the method of any of the claims 1 to 12.

15. A computer-readable storage medium comprising instructions which, when executed by a computer, cause the computer to carry out the steps of the method of any of the claims 1 to 12.
